# EUROPEAN PATENT APPLICATION

(11) **EP 4 530 319 A1**
(43) Date of publication of application: **02.04.2025**
(21) Application number: 24172261.0
(22) Date of filing: 24.04.2024
(51) Int. Cl.: C09B 67/04, C09B 67/48

(54) **C.I. PIGMENT YELLOW 101, METHOD FOR PRODUCING THE SAME, AND COLORING COMPOSITION CONTAINING C.I. PIGMENT YELLOW 101**

(30) Priority: 27.09.2023 JP 2023166029
(71) Applicant: FUJIFILM Business Innovation Corp., Minato-ku Tokyo (JP)
(72) Inventor: MANABE, Kohei, Kanagawa (JP); NAKAMURA, Yukiaki, Kanagawa (JP); HORIUCHI, Misaki, Kanagawa (JP)
(74) Representative: Haseltine Lake Kempner LLP

(57) **Abstract**

A C.I. Pigment Yellow 101 has an average particle size of 100 nm or more and 700 nm or less, and, in an X-ray diffraction pattern obtained by powder X-ray diffractometry, a second peak from a low angle side is present at a diffraction angle 2θ in the range of 11.66° or more and 11.86° or less.

## Description

### Background

### (i) Technical Field

The present disclosure relates to C.I. Pigment Yellow 101, a method for producing the same, and a coloring composition containing C.I. Pigment Yellow 101.

### (ii) Related Art

Organic pigments are used in toners for electrophotographic image forming apparatuses and color filters of liquid crystal displays, electronic paper, and organic EL displays. Recent years have seen growing demand for higher image quality such as higher definition, and, under such circumstances, organic pigments used therein have been subjected to particle size reduction to improve tinting power.

For example, Japanese Unexamined Patent Application Publication No. 2004-26930 discloses a highly crystalline insoluble azo pigment having a particle size of 30 to 150 nm.

### Summary

However, when C.I. Pigment Yellow 101, which is a yellow organic pigment, is subjected to particle size reduction, degradation of the fluorescent color caused by the particle size reduction is sometimes observed.

Accordingly, it is an object of the present disclosure to provide a C.I. Pigment Yellow 101 having an average particle size of 100 nm or more and 700 nm or less and exhibiting a high fluorescent color compared to a C.I. Pigment Yellow 101 in which, in an X-ray diffraction pattern obtained by powder X-ray diffractometry, a second peak from a low angle side is present at a diffraction angle 2θ of less than 11.66° or more than 11.86°.

According to a first aspect of the present disclosure, there is provided a C.I. Pigment Yellow 101 having an average particle size of 100 nm or more and 700 nm or less, in which, in an X-ray diffraction pattern obtained by powder X-ray diffractometry, a second peak from a low angle side is present at a diffraction angle 2θ in a range of 11.66° or more and 11.86° or less.

According to a second aspect of the present disclosure, there is provided the C.I. Pigment Yellow 101 of the first embodiment, in which the average particle size is 150 nm or more and 500 nm or less.

According to a third aspect of the present disclosure, there is provided the C.I. Pigment Yellow 101 according to the first or second aspect, in which, in the X-ray diffraction pattern obtained by powder X-ray diffractometry, a third peak from the low angle side is present at a diffraction angle 2θ in a range of 17.86° or more and 18.06° or less.

According to a fourth aspect of the present disclosure there is provided a method for producing the C.I. Pigment Yellow 101 according to any one of the first to third aspects, the method including subjecting a C.I. Pigment Yellow 101 having an average particle size of 1 µm or more and 5 µm or less to particle size reduction by using beads having a specific weight of 2.5 or more and 6.0 or less and a bead diameter of 0.03 mm or more and 0.3 mm or less and a stirring mechanism at a peripheral speed of 4.8 m/s or more and 14.4 m/s or less.

According to a fifth aspect of the present disclosure, there is provided a coloring composition containing the C.I. Pigment Yellow 101 according to any one of the first to third aspects.

According to a sixth aspect of the present disclosure, there is provided the coloring composition according to the fifth aspect, in which the coloring composition is a toner for developing electrostatic charge images.

The aspects described above have the following effects.

According to the first aspect of the present disclosure, there is provided a C.I. Pigment Yellow 101 that exhibits a high fluorescent color despite the small particle size compared to a C.I. Pigment Yellow 101 having an average particle size of 100 nm or more and 700 nm or less, in which, in an X-ray diffraction pattern obtained by powder X-ray diffractometry, the second peak from the low angle side is present at a diffraction angle 2θ of less than 11.66° or more than 11.86°.

According to the second aspect of the present disclosure, there is provided a C.I. Pigment Yellow 101 that exhibits a high fluorescent color despite the small particle size compared to a C.I. Pigment Yellow 101 that has an average particle size of 100 nm or more and less than 150 nm, or more than 500 nm and 700 nm or less.

According to the third aspect of the present disclosure, there is provided a C.I. Pigment Yellow 101 that exhibits a high fluorescent color despite the small particle size compared to a C.I. Pigment Yellow 101 in which, in an X-ray diffraction pattern obtained by powder X-ray diffractometry, the second peak from the low angle side is present at a diffraction angle 2θ of 11.66° or more and 11.86° or less and the third peak from the low angle side is present at a diffraction angle 2θ of less than 17.86° or more than 18.06°.

According to the fourth aspect of the present disclosure, there is provided a method for producing a C.I. Pigment Yellow 101 that exhibits a high fluorescent color despite the small particle size compared to a method for producing a C.I. Pigment Yellow 101, the method involving subjecting a C.I. Pigment Yellow 101 having an average particle size of 1 µm or more and 5 µm or less to particle size reduction by using beads having a specific weight of less than 2.5 or more than 6.0 and a bead diameter of less than 0.03 mm or more than 0.3 mm and a stirring mechanism at a peripheral speed of less than 4.8 m/s or more than 14.4 m/s.

According to the fifth aspect of the present disclosure, there is provided a coloring composition that contains a C.I. Pigment Yellow 101 that exhibits a high fluorescent color despite the small particle size compared to when a C.I. Pigment Yellow 101 having an average particle size of 100 nm or more and 700 nm or less, in which, in the X-ray diffraction pattern obtained by powder X-ray diffractometry, the second peak from the low angle side is present at a diffraction angle 2θ of less than 11.66° or more than 11.86° is applied.

According to the sixth aspect of the present disclosure, there is provided a coloring composition that serves as a toner for developing electrostatic charge images and that contains a C.I. Pigment Yellow 101 that exhibits a high fluorescent color despite the small particle size compared to when a C.I. Pigment Yellow 101 having an average particle size of 100 nm or more and 700 nm or less, in which, in the X-ray diffraction pattern obtained by powder X-ray diffractometry, the second peak from the low angle side is present at a diffraction angle 2θ of less than 11.66° or more than 11.86° is applied.

### Brief Description of the Drawings

Exemplary embodiments of the present disclosure will be described in detail based on the following figures, wherein:

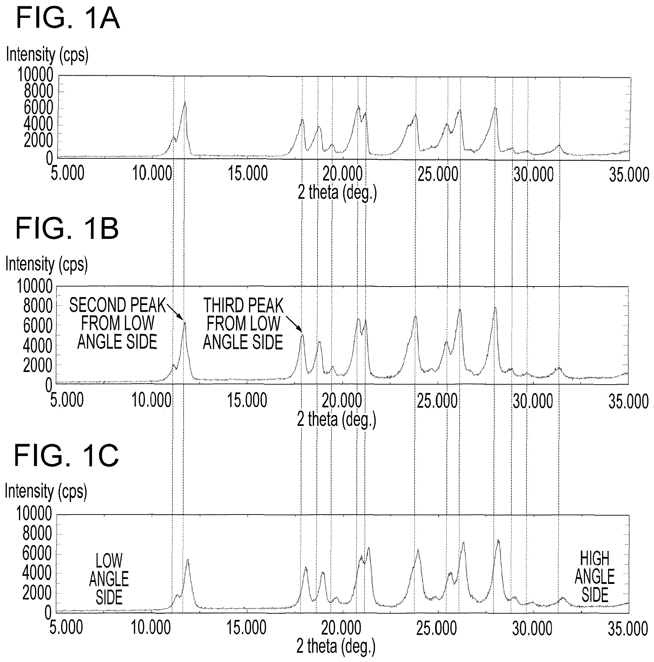

Fig. 1A is a schematic diagram illustrating one example of an X-ray diffraction pattern obtained by powder X-ray diffractometry from C.I. Pigment Yellow 101 before particle size reduction;
Fig. 1B is a schematic diagram illustrating one example of an X-ray diffraction pattern obtained by powder X-ray diffractometry from C.I. Pigment Yellow 101 after particle size reduction (Examples); and
Fig. 1C is a schematic diagram illustrating one example of an X-ray diffraction pattern obtained by powder X-ray diffractometry from C.I. Pigment Yellow 101 after particle size reduction (Comparative Examples).

### Detailed Description

The exemplary embodiments of the present disclosure will now be described. The following descriptions and examples are used to illustrate exemplary embodiments and do not limit the scope of the present disclosure.

In any numerical range of the exemplary embodiments expressed by using "to", the number preceding "to" and the number following "to" as the minimum value and the maximum value are included in such a numerical range.

In any stepwise numerical range of the exemplary embodiments, the upper limit or the lower limit of one numerical range may be substituted with the upper limit or the lower limit of a different stepwise numerical range. In any numerical range of the exemplary embodiments, the upper limit or the lower limit of that numerical range may be substituted with any value disclosed in Examples.

In the exemplary embodiments, the term "step" refers not only to an independent step but also to any feature that fulfills the intended purpose of that step although such a feature may not be clearly distinguishable from other steps.

When any exemplary embodiment is described with reference to the drawings, that exemplary embodiment is not limited to the features illustrated in the drawings. In addition, the size of each of the members in the drawings is only schematic, and the relative size relationships among the members are not limited to the ones illustrated in the drawings.

In the exemplary embodiments, each component may contain multiple substances. In exemplary embodiments, when the amount of a component in a composition is described and when there are two or more substances that correspond to that component in the composition, the amount is the total amount of the two or more substances in the composition unless otherwise noted.

In the exemplary embodiments, the notation "(meth)acryl" means either "acryl" or "methacryl".

In the exemplary embodiments, the term "fluorescent color" refers to a color (green) of light having a wavelength of 510 nm or more and 530 nm or less.

### C.I. Pigment Yellow 101

A C.I. Pigment Yellow 101 according to an exemplary embodiment has an average particle size of 100 nm or more and 700 nm or less, in which, in an X-ray diffraction pattern obtained by powder X-ray diffractometry, a second peak from a low angle side is present at a diffraction angle 2θ in the range of 11.66° or more and 11.86° or less.

Since the C.I. Pigment Yellow 101 of this exemplary embodiment has the aforementioned features, a high fluorescent color is exhibited despite the small particle size. The reason for this is presumably as follows.

C.I. Pigment Yellow 101 is a coloring material that exhibits a fluorescent color.

Commercially available products of C.I. Pigment Yellow 101 have a particle size of about 3 µm and undergo particle size reduction in order for these products to be used in coloring compositions such as toners so that the composition encapsulation property and the composition coloring property are improved.

A mechanochemical method has been widely employed as the method for reducing the particle size of organic pigments.

However, when the C.I. Pigment Yellow 101 is subjected to particle size reduction by this method, the fluorescent color becomes degraded in some cases.

Depending on the particle size reduction system or the particle size reduction conditions, the mechanochemical method may apply high mechanical energy to organic pigments during the process of particle size reduction, and may generate lattice defects, lattice strain, crystal form transition, amorphization, etc., in the crystal structures of the organic pigments. Presumably thus, the particle size reduction of C.I. Pigment Yellow 101 changes the crystal structure and degrades the fluorescent color. The change in crystal structure can be confirmed by a change in the X-ray diffraction pattern obtained by performing powder X-ray diffractometry on the C.I. Pigment Yellow 101 after the particle size reduction, the change involving shifting of the peaks toward the high angle side (or low angle side).

In contrast, in an X-ray diffraction pattern obtained by powder X-ray diffractometry from the C.I. Pigment Yellow 101 of this exemplary embodiment, the second peak from the low angle side is present at a diffraction angle 2θ in the range of 11.66° or more and 11.86° or less (see Fig. 1B) despite the particle size reduction. This shows that there is a smaller shift of peaks in the X-ray diffraction pattern obtained by performing powder X-ray diffractometry on the C.I. Pigment Yellow 101 after the particle size reduction toward the high angle side (or low angle side) compared to before the particle size reduction. In other words, the changes in crystal structure of the C.I. Pigment Yellow 101 between before and after the particle size reduction are smaller, and presumably thus the degradation of the fluorescent color is reduced.

Thus, it is expected that the C.I. Pigment Yellow 101 of this exemplary embodiment exhibits a high fluorescent color despite the small particle size.

The C.I. Pigment Yellow 101 of this exemplary embodiment will now be described in detail.

C.I. Pigment Yellow 101

The C.I. Pigment Yellow 101 of this exemplary embodiment is 1,1'-[azinobismethylidine]bis[2-naphthol]. "C.I." is short for "Color Index".

The C.I. Pigment Yellow 101 according to this exemplary embodiment has an average particle size of 100 nm or more and 700 nm or less, in which, in an X-ray diffraction pattern obtained by powder X-ray diffractometry, a second peak from a low angle side is present at a diffraction angle 2θ in the range of 11.66° or more and 11.86° or less.

Since the C.I. Pigment Yellow 101 of this exemplary embodiment has an average particle size of 100 nm or more and 700 nm or less, the particle size thereof is small. With the small particle size, the particles of the C.I. Pigment Yellow 101 have an increased specific surface area and thus easily absorb light and exhibit improved tinting power.

Meanwhile, from the viewpoint of preventing re-aggregation of the particles (primary particles) of small-size C.I. Pigment Yellow 101 and obtaining a high fluorescent color while retaining the desired tinting power, the average particle size of the C.I. Pigment Yellow 101 is preferably 150 nm or more and 500 nm or less, more preferably 200 nm or more and 400 nm or less, and yet more preferably 250 nm or more and 300 nm or less.

In addition, in an X-ray diffraction pattern obtained by powder X-ray diffractometry from the C.I. Pigment Yellow 101 of this exemplary embodiment, the second peak from the low angle side is present at a diffraction angle 2θ in the range of 11.66 ° or more and 11.86 ° or less. Since the second peak from the low angle side does not notably shift toward the high angle side (or low angle side) and is present within the aforementioned range, the C.I. Pigment Yellow 101 undergoes less changes in crystal structure between before and after the particle size reduction. Thus, the C.I. Pigment Yellow 101 of this exemplary embodiment exhibits a high fluorescent color despite the small particle size.

In addition, in an X-ray diffraction pattern obtained by powder X-ray diffractometry from the C.I. Pigment Yellow 101 of this exemplary embodiment, the third peak from the low angle side may be present at a diffraction angle 2θ in the range of 17.86° or more and 18.06° or less. Since the third peak from the low angle side does not notably shift toward the high angle side (or low angle side) and is present within the aforementioned range, the C.I. Pigment Yellow 101 undergoes further less changes in crystal structure between before and after the particle size reduction. Thus, the C.I. Pigment Yellow 101 of this exemplary embodiment more easily exhibits a high fluorescent color despite the small particle size.

The phrase "peak is present at a diffraction angle 2θ within the aforementioned range" in the X-ray diffraction pattern means that the apex (the highest intensity point of the peak present at a diffraction angle 2θ range in the aforementioned range) is present at a diffraction angle 2θ in the aforementioned range.

It should be noted that, in an X-ray diffraction pattern obtained by powder X-ray diffractometry of the C.I. Pigment Yellow 101 of this exemplary embodiment, the second peak from the low angle side and the third peak from the low angle side respectively correspond to the peaks illustrated in Fig. 4 of a nonpatent document (Xiang Yao, et al., "Multistimuli-Responsive Luminescence of Naphthalazine Based on Aggregation-Induced Emission" Chemistry Open Volume 4, Issue 4, pp. 478-482), namely, a peak present at a diffraction angle 2θ = 11.66° and a peak present at a diffraction angle 2θ = 17.86° minutely shifted toward the high angle side in an X-ray diffraction pattern obtained by powder X-ray diffractometry.

### Method for producing C.I. Pigment Yellow 101

A method according to an exemplary embodiment for producing a C.I. Pigment Yellow 101 having an average particle size of 100 nm or more and 700 nm or less, in which, in an X-ray diffraction pattern obtained by powder X-ray diffractometry, a second peak from a low angle side is present at a diffraction angle 2θ in the range of 11.66° or more and 11.86° or less involves reducing the particle size of C.I. Pigment Yellow 101 having an average particle size of 1 µm or more and 5 µm or less by using beads having a specific weight of 2.5 or more and 6.0 or less and a bead diameter of 0.03 mm or more and 0.3 mm or less and a stirring mechanism at a peripheral speed of 4.8 m/s or more and 14.4 m/s or less. Since the system that uses beads as media (in other words, a bead mill system) is employed as the particle size reduction system and the particle size reduction is performed under the aforementioned conditions, a C.I. Pigment Yellow 101 that exhibits a high fluorescent color despite the small particle size is obtained.

The method for producing the C.I. Pigment Yellow 101 of this exemplary embodiment will now be described in detail.

### Preliminary step

First, C.I. Pigment Yellow 101 to be subjected to particle size reduction is prepared. A known commercially available product can be used as the C.I. Pigment Yellow 101 to be subj ected to particle size reduction. The commercially available product can be purchased from, for example, BASF Japan Ltd., Neelikon Food Dyes And Chemicals Ltd., and Radiant. The C.I. Pigment Yellow 101 to be subjected to the particle size reduction is the one already having an average particle size of 1 µm or more and 5 µm or less from the viewpoint of the particle size reduction.

The C.I. Pigment Yellow 101 to be subjected to the particle size reduction may be wetted with a liquid and take a form of a slurry. Examples of the liquid for preparing the slurry include water and tetrahydrofuran, and, if needed, a surfactant or a dispersing agent may be used.

The slurry may be prepared to have a solid concentration of, for example, 5 mass% or more and 30 mass% or less relative to the total mass of the slurry. The slurry may be prepared to have a viscosity of, for example, 5 MPa s or more and 500 mPa's or less.

The slurry can be prepared by using a known stirring device such as a high-speed shear disperser and a Henschel mixer.

### Particle size reduction

Next, the prepared slurry of the C.I. Pigment Yellow 101 is charged into a bead mill through a compartment inlet and subjected to particle size reduction.

### Operation conditions of bead mill

The compartment of the bead mill may be vertical or horizontal.

The shape of the stirring mechanism of the bead mill can be appropriately selected from a disk type, a pin type, and a single rotor type.

The material for the beads may be appropriately selected from glass, alumina, high-purity alumina, zircon, zirconia, silicon nitride, steel, etc., as long as the specified specific weight is satisfied.

The specific weight of the beads is 2.5 or more and 6.1 or less. When the specific weight of the beads is within this range, C.I. Pigment Yellow 101 exhibiting a high fluorescent color despite the small particle size can be obtained since excessive energy is not applied to the C.I. Pigment Yellow 101 during the particle size reduction. The specific weight of the beads is more preferably 3.0 or more and 5.0 or less and most preferably 3.5 or more and 4.0 or less.

The specific weight of the beads is measured as follows.

Into a 100 mL measuring flask, 50 g of beads are placed. Next, 100 mL of water is weighed by using a 100 mL measuring cylinder. To the measuring flask loaded with the beads, the weighed water is poured up to a marked line of the measuring flask, and the specific weight is calculated by 50 g/(volume of water remaining in measuring cylinder) = specific weight.

The bead diameter is 0.03 mm or more and 0.30 mm or less. When the bead diameter is within this range, the bead charge rate can be adjusted to be in such a range that excessive mechanical energy is not applied to the C.I. Pigment Yellow 101, and thus a C.I. Pigment Yellow 101 exhibiting a high fluorescent color despite the small particle size is obtained. The bead diameter is preferably 0.07 mm or more and 0.20 mm or less and more preferably 0.10 mm or more and 0.15 mm or less.

The method for measuring the bead diameter is as follows.

The subject beads are observed with an optical microscope and imaged, and the obtained image is captured into an image analyzer (LUZEX III produced by NIRECO CORPORATION) and analyzed to calculate the bead diameter. Specifically, the area of each bead is measured, and an equivalent circle diameter is calculated from the area value. The 50% diameter (D₅₀) in the number-based cumulative frequency of the obtained equivalent circle diameters is assumed to be the bead diameter. The image analysis is performed on 200 beads arbitrarily selected.

The bead charge rate relative to the volume of the bead mill chamber is preferably 60 vol% or more and 95 vol% or less, more preferably 70 vol% or more and 90 vol% or less, and yet more preferably 75 vol% or more and 85 vol% or less. When the bead charge rate is within the aforementioned range, excess mechanical energy is not applied to the C.I. Pigment Yellow 101, and a C.I. Pigment Yellow 101 exhibiting a high fluorescent color despite the small particle size can be easily obtained.

The peripheral speed of the stirring mechanism of the bead mill is 4.8 m/s or more and 14.4 m/s or less. When the peripheral speed of the stirring mechanism is within this range, a C.I. Pigment Yellow 101 exhibiting a high fluorescent color despite the small particle size is obtained since excessive energy is not applied to the C.I. Pigment Yellow 101. In this range, the possibility of heat generation from the slurry and contamination caused by wear inside the mill, etc., is also low. The peripheral speed of the stirring mechanism is preferably 6.0 m/s or more and 13.2 m/s or less, more preferably 7.2 m/s or more and 12.0 m/s or less, and yet more preferably 8.4 m/s or more and 10.8 m/s or less.

The mill dwelling time may be freely set until the particle size is reduced to the desired particle size and is preferably 0.5 min or more and 15 min or less, more preferably 1 min or more and 10 min or less, and yet more preferably 1.5 min or more and 7.5 min or less.

### Operation system of bead mill

The bead mill may be appropriately selected from a batch system, a pass system, and a circulation system and operated.

### Post step

After the particle size reduction, the slurry of the C.I. Pigment Yellow 101 is discharged from the bead mill through a compartment outlet, and dried. Drying may be natural drying or reduced pressure drying.

A C.I. Pigment Yellow 101 exhibiting a high fluorescent color despite the small particle size can be produced by the aforementioned method.

### Methods for measuring physical properties of C.I. Pigment Yellow 101

### Average particle size

The average particle size of the C.I. Pigment Yellow 101 can be calculated as follows.

The C.I. Pigment Yellow 101 after the particle size reduction is observed with a scanning electron microscope (SEM) (S-4100 produced by Hitachi, Ltd.) and imaged, and the obtained image is captured into an image analyzer (LUZEX III produced by NIRECO CORPORATION) and analyzed to calculate the average particle size.

Specifically, the area of each particle is measured, and an equivalent circle diameter is calculated from the area value. The 50% diameter (D₅₀) in the number-based cumulative frequency of the obtained equivalent circle diameters is assumed to be the average particle size of the C.I. Pigment Yellow 101. The image analysis is performed on 200 particles of the C.I. Pigment Yellow 101 arbitrarily selected.

### Diffraction angles 2θ of peaks in X-ray diffraction pattern

The diffraction angles 2θ of the peaks in an X-ray diffraction pattern obtained by powder X-ray diffractometry can be measured by using an X-ray measuring instrument (Rigaku X-RAY DIFFRACTOMETER RINT-2100 produced by Rigaku Corporation). The measurement conditions are as follows.
X-ray source: CuKα
Sampling width: 0.02°
Divergence slit: 1 °
Scattering slit: 1 °
Receiving slit: 0.3 mm
Voltage: 30 kV
Current: 15 mA
Measurement range: 5.0° to 35.0°
Step angle: 0.02°
Step time: 1.2 seconds

### Coloring composition

A coloring composition according to an exemplary embodiment contains the C.I. Pigment Yellow 101 of the exemplary embodiment.

The coloring composition of this exemplary embodiment is used in ink sheets for thermal transfer recording, toners (specifically, toner particles) for developing electrostatic charge images, inks for inkjet recording, color filters, writing pens, color plastics, and other inks (paints, etc.).

In particular, the composition of this exemplary embodiment can be used in ink sheets for thermal transfer recording, toners, and inks for inkjet recording.

Hereinafter, a toner (specifically, toner particles) for developing electrostatic charge images is described as a representative example in which the composition of the present exemplary embodiment is used.

The toner for developing electrostatic charge image according to this exemplary embodiment (hereinafter may be simply referred to as the "toner") contains toner particles and, if necessary, an external additive.

### Toner particles

The toner particles contain, for example, a binder resin and the C.I. Pigment Yellow 101 of this exemplary embodiment. The toner particles may contain, if necessary, coloring agents other than the C.I. Pigment Yellow 101 of the exemplary embodiment, a releasing agent, and other additives.

Here the amount of the C.I. Pigment Yellow 101 of the exemplary embodiment contained relative to the entirety of the toner particles is preferably 3 mass% or more and 10 mass% or less and more preferably 5 mass% or more and 8 mass% or less.

### Binder resin

Examples of the binder resin include vinyl resins such as homopolymers of the following monomers or copolymers of two or more of the following monomers: styrenes (for example, styrene, parachlorostyrene, α-methylstyrene, etc.), (meth)acrylate esters (for example, methyl acrylate, ethyl acrylate, n-propyl acrylate, n-butyl acrylate, lauryl acrylate, 2-ethylhexyl acrylate, methyl methacrylate, ethyl methacrylate, n-propyl methacrylate, lauryl methacrylate, 2-ethylhexyl methacrylate, etc.), ethylenically unsaturated nitriles (for example, acrylonitrile, methacrylonitrile, etc.), vinyl ethers (for example, vinyl methyl ether and vinyl isobutyl ether), vinyl ketones (vinyl methyl ketone, vinyl ethyl ketone, vinyl isopropenyl ketone, etc.), and olefins (for example, ethylene, propylene, butadiene, etc.).

Examples of the binder resin also include non-vinyl resins such as epoxy resin, polyester resin, polyurethane resin, polyamide resin, cellulose resin, polyether resin, and modified rosin, mixtures of these non-vinyl resins with the aforementioned vinyl resins, and graft polymers obtained by polymerizing vinyl monomers in the presence of non-vinyl resins.

These binder resins may be used alone or in combination.

The binder resin can be a polyester resin.

Examples of the polyester resin include known amorphous polyester resins. The polyester resin may be a combination of an amorphous polyester resin and a crystalline polyester resin. However, 2 mass% or more and 40 mass% or less (preferably 2 mass% or more and 20 mass% or less) of the crystalline polyester resin may be used relative to the entire binder resin.

Here, the "crystalline" resin refers to a resin that has a clear endothermic peak instead of a stepwise endothermic quantity change in differential scanning calorimetry (DSC), and, specifically, has an endothermic peak half-width within 10 ° C when measured at a temperature elevation rate of 10 (°C/min).

In contrast, the "amorphous" resin refers to a resin that has a half-width exceeding 10°C, exhibits a stepwise endothermic quantity change, or has no clear endothermic peak.

### Amorphous polyester resin

Examples of the amorphous polyester resin include condensation polymers obtained from polycarboxylic acids and polyhydric alcohols. The amorphous polyester resin may be a commercially available product or may be synthesized and used.

Examples of the polycarboxylic acid include aliphatic dicarboxylic acids (for example, oxalic acid, malonic acid, maleic acid, fumaric acid, citraconic acid, itaconic acid, glutaconic acid, succinic acid, alkenylsuccinic acid, adipic acid, sebacic acid, etc.), alicyclic dicarboxylic acids (for example, cyclohexane dicarboxylic acid etc.), aromatic dicarboxylic acids (for example, terephthalic acid, isophthalic acid, phthalic acid, naphthalene dicarboxylic acid, etc.), anhydrides thereof, and lower (for example, C1-C5) alkyl esters thereof. Among these, aromatic dicarboxylic acids are preferable as the polycarboxylic acid.

The polycarboxylic acid may be a combination of a dicarboxylic acid and a tri- or higher carboxylic acid having a crosslinked or branched structure. Examples of the tri- or higher carboxylic acids include trimellitic acid, pyromellitic acid, anhydrides thereof, and lower (for example, C1-C5) alkyl esters thereof.

These polycarboxylic acids may be used alone or in combination.

Examples of the polyhydric alcohol include aliphatic diols (for example, ethylene glycol, diethylene glycol, triethylene glycol, propylene glycol, butanediol, hexanediol, neopentyl glycol, etc.), alicyclic diols (for example, cyclohexanediol, cyclohexanedimethanol, hydrogenated bisphenol A, etc.), and aromatic diols (for example, ethylene oxide adducts of bisphenol A, propylene oxide adducts of bisphenol A, etc.). Among these, aromatic diols and alicyclic diols are preferable and aromatic diols are more preferable as the polyhydric alcohol.

The polyhydric alcohol may be a combination of a diol and a trihydric or higher alcohol having a crosslinked or branched structure. Examples of the trihydric or higher alcohols include glycerin, trimethylolpropane, and pentaerythritol.

These polyhydric alcohols may be used alone or in combination.

The glass transition temperature (Tg) of the amorphous polyester resin is preferably 50°C or higher and 80°C or lower and more preferably 50°C or higher and 65°C or lower.

Here, the glass transition temperature is determined from a DSC curve obtained by differential scanning calorimetry (DSC), more specifically, according to "extrapolated glass transition onset temperature" described in the method for determining the glass transition temperature in JIS K 7121:1987 "Testing Methods for Transition Temperatures of Plastics".

The weight-average average molecular weight (Mw) of the amorphous polyester resin is preferably 5,000 or more and 1,000,000 or less and more preferably 7,000 or more and 500,000 or less.

The number-average average molecular weight (Mn) of the amorphous polyester resin is preferably 2,000 or more and 100,000 or less.

The molecular weight distribution Mw/Mn of the amorphous polyester resin is preferably 1.5 or more and 100 or less and more preferably 2 or more and 60 or less.

The weight-average average molecular weight and the number-average average molecular weight are measured by gel permeation chromatography (GPC). In the molecular weight measurement by GPC, GPC HLC-8120 GPC produced by TOSOH CORPORATION is used as the measurement instrument with columns, TSKgel SuperHM-M (15 cm), produced by TOSOH CORPORATION, and a THF solvent. The weight-average average molecular weight and the number-average average molecular weight are calculated from the molecular weight calibration curve plotted from the measurement results and monodisperse polystyrene standard samples.

The amorphous polyester resin is obtained by a known production method. Specifically, the amorphous polyester resin is obtained by the reaction that involves a polymerization temperature of 180°C or higher and 230°C or lower, reducing the pressure inside the system as necessary, and removing water and alcohols that are generated during condensation.

If monomers of the raw materials do not dissolve or become miscible at the reaction temperature, a high-boiling-point solvent may be added as a solubilizer to dissolve. Here, the polycondensation reaction is performed while distilling away the solubilizer. When monomers that are poorly miscible to each other are present, the poorly miscible monomer and an acid or alcohol designed to be polycondensed with that monomer may be condensed in advance and then polycondensed with the main component.

### Crystalline polyester resin

Examples of the crystalline polyester resin include condensation polymers obtained from polycarboxylic acids and polyhydric alcohols. The crystalline polyester resin may be a commercially available product or may be synthesized and used.

Here, to facilitate formation of the crystal structure, the crystalline polyester resin may be a condensation polymer obtained by using a polymerizable monomer having a linear aliphatic group rather than a polymerizable monomer having an aromatic group.

Examples of the polycarboxylic acid include aliphatic dicarboxylic acids (for example, oxalic acid, succinic acid, glutaric acid, adipic acid, suberic acid, azelaic acid, sebacic acid, 1,9-nonanedicarboxylic acid, 1,10-decanedicarboxylic acid, and 1,12-dodecanedicarboxylic acid, 1,14-tetradecanedicarboxylic acid, 1,18-octadecanedicarboxylic acid, etc.), aromatic dicarboxylic acids (for example, dibasic acids such as phthalic acid, isophthalic acid, terephthalic acid, naphthalene-2,6-dicarboxylic acid, etc.), anhydrides thereof, and lower (for example, C1-C5) alkyl esters thereof.

The polycarboxylic acid may be a combination of a dicarboxylic acid and a tri- or higher carboxylic acid having a crosslinked or branched structure. Examples of the tricarboxylic acid include aromatic carboxylic acids (for example, 1,2,3-benzenetricarboxylic acid, 1,2,4-benzenetricarboxylic acid, 1,2,4-naphthalenetricarboxylic acid, etc.), anhydrides thereof, and lower (for example, C1-C5) alkyl esters thereof.

As the polycarboxylic acid, these dicarboxylic acids may be used in combination with sulfonic acid group-containing dicarboxylic acids and ethylene double bond-containing dicarboxylic acids.

These polycarboxylic acids may be used alone or in combination.

Examples of the polyhydric alcohol include aliphatic diols (for example, linear aliphatic diols having a main chain moiety having 7 or more and 20 or less carbon atoms). Examples of the aliphatic diol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, and 1,20-eicosanediol. Among these, 1,8-octanediol, 1,9-nonanediol, and 1,10-decanediol are preferable as the aliphatic diol.

A combination of a diol and a trihydric or higher alcohol having a crosslinked or branched structure may be used as the polyhydric alcohol. Examples of the trihydric or higher alcohol include glycerin, trimethylolethane, trimethylolpropane, and pentaerythritol.

These polyhydric alcohols may be used alone or in combination.

Here, the polyhydric alcohol may contain 80 mol% or more and preferably 90 mol% or more of the aliphatic diol.

The melting temperature of the crystalline polyester resin is preferably 50°C or higher and 100 ° C or lower, more preferably 55°C or higher and 90 ° C or lower, and yet more preferably 60°C or higher and 85°C or lower.

Here, the melting temperature is determined from a DSC curve obtained by differential scanning calorimetry (DSC) according to "Melting peak temperature" described in the method for determining the melting point in JIS K 7121-1987 "Testing Methods for Transition Temperatures of Plastics".

The weight-average average molecular weight (Mw) of the crystalline polyester resin may be 6,000 or more and 35,000 or less.

As with the amorphous polyester resin, the crystalline polyester resin is obtained by a known production method.

The amount of the binder resin contained relative to the entirety of the toner particles is preferably 40 mass% or more and 95 mass% or less, more preferably 50 mass% or more and 90 mass% or less, and yet more preferably 60 mass% or more and 85 mass% or less.

### Coloring agent

A coloring agent contains a C.I. Pigment Yellow 101 according to an exemplary embodiment. Examples of the coloring agent that may be used in combination with the C.I. Pigment Yellow 101 of the exemplary embodiment include various pigments such as carbon black, chrome yellow, hansa yellow, benzidine yellow, threne yellow, quinoline yellow, pigment yellow, permanent orange GTR, pyrazolone orange, vulcan orange, watchung red, permanent red, brilliant carmine 3B, brilliant carmine 6B, dupont oil red, pyrazolone red, lithol red, rhodamine B lake, lake red C, pigment red, rose bengal, aniline blue, ultramarine blue, calco oil blue, methylene blue chloride, phthalocyanine blue, pigment blue, phthalocyanine green, malachite green oxalate, titanium oxide, zinc oxide, calcium carbonate, basic lead carbonate, a zinc sulfide-barium sulfate mixture, zinc sulfide, silicon dioxide, and aluminum oxide; and dyes such as acridine dyes, xanthene dyes, azo dyes, benzoquinone dyes, azine dyes, anthraquinone dyes, thioindigo dyes, dioxazine dyes, thiazine dyes, azomethine dyes, indigo dyes, phthalocyanine dyes, aniline black dyes, polymethine dyes, triphenylmethane dyes, diphenylmethane dyes, and thiazole dyes.

Specific examples of the pigment are as follows:
C.I. Pigment Yellow 1, 3, 11, 12, 13, 14, 15, 16, 17, 20, 24, 31, 53, 55, 60, 61, 65, 71, 73, 74, 81, 83, 86, 93, 95, 97, 98, 99, 100, 104, 106, 108, 109, 110, 113, 114, 116, 117, 119, 120, 125, 126, 127, 128, 129, 137, 138, 139, 147, 148, 150, 151, 152, 153, 154, 155, 156, 166, 167, 168, 175, 180, and 185;
C.I. Pigment Orange 5, 13, 14, 16, 17, 24, 34, 36, 38, 40, 43, 46, 49, 51, 55, 59, 61, 63, 64, 71, and 73;
C.I. Pigment Violet 1, 19, 23, 29, 30, 32, 36, 37, 38, 39, 40, and 50;
C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48:1, 48:2, 48:3, 48:4, 49:1, 49:2, 50:1, 52:1, 53:1, 57, 57:1, 57:2, 58:2, 58:4, 60:1, 63:1, 63:2, 64:1, 81:1, 83, 88, 90:1, 97, 101, 102, 104, 105, 106, 108, 112, 113, 114, 122, 123, 144, 146, 149, 150, 151, 155, 166, 168, 170, 171, 172, 174, 175, 176, 177, 178, 179, 180, 185, 187, 188, 190, 192, 193, 194, 202, 206, 207, 208, 209, 215, 216, 217, 220, 223, 224, 226, 227, 228, 238, 240, 242, 243, 245, 254, 255, 264, and 265;
C.I. Pigment Blue 1, 2, 15, 15:3, 15:4, 15:6, 16, 22, 60, 64, 66, and 76;
C.I. Pigment Green 7, 36, 37, 58, and 59;
C.I. Pigment Brown 23, 25, 26, and 28; and
C.I. Pigment Black 1 and 7.

These coloring agents may be used alone or in combination.

The coloring agent may be surface-treated as necessary or may be used in combination with a dispersing agent. Two or more coloring agents may be used in combination.

The amount of the coloring agent contained relative to the entirety of the toner particles is preferably 1 mass% or more and 30 mass% or less and more preferably 3 mass% or more and 15 mass% or less.

### Releasing agent

Examples of the releasing agent include hydrocarbon wax; natural wax such as carnauba wax, rice wax, and candelilla wax; synthetic or mineral or petroleum wax such as montan wax; and ester wax such as fatty acid esters and montanic acid esters. The releasing agent is not limited to these.

The melting temperature of the releasing agent is preferably 50°C or higher and 110 ° C or lower and more preferably 60°C or higher and 100°C or lower.

Here, the melting temperature is determined from a DSC curve obtained by differential scanning calorimetry (DSC) according to "Melting peak temperature" described in the method for determining the melting point in JIS K 7121-1987 "Testing Methods for Transition Temperatures of Plastics".

The amount of the releasing agent contained relative to the entirety of the toner particles is preferably 1 mass% or more and 20 mass% or less and more preferably 5 mass% or more and 15 mass% or less.

### Other additives

Examples of the other additives include known additives such as magnetic bodies, charge controllers, and inorganic powders. These additives are contained in the toner particles as internal additives.

### Properties of toner particles, etc.

The toner particles may have a single layer structure or a core-shell structure constituted by a core (core particle) and a coating layer (shell layer) covering the core.

Here, the toner particles having a core-shell structure may be constituted by, for example, a core containing a binder resin and other optional additives such as a coloring agent and a releasing agent, and a coating layer containing a binder resin.

The average particle size (D50v) of the toner particles is preferably 2 µm or more and 10 µm or less and more preferably 4 µm or more and 8 µm or less.

Various average particle sizes and various particle size distribution indices of the toner particles are measured by using COULTER MULTISIZER II (produced by Beckman Coulter Inc.) and ISOTON-II (produced by Beckman Coulter Inc.) as the electrolyte.

In measuring, 0.5 mg or more and 50 mg or less of a measurement sample is added to 2 mL of a 5% aqueous solution of a surfactant (for example, sodium alkylbenzene sulfonate) serving as a dispersing agent. The resulting mixture is added to 100 mL or more and 150 mL or less of an electrolyte solution.

The electrolyte solution containing the suspended sample is dispersed for 1 minute with an ultrasonic dispersing machine, and the particle size distribution of particles having a particle size in the range of 2 µm or more and 60 µm or less is measured by using COULTER MULTISIZER II with an aperture having a diameter of 100 µm. The number of sampled particles is 50,000.

On the basis of the measured particle size distribution, the volume and the number are plotted versus particle size ranges (channels) from the small diameter side to draw cumulative distributions, and then the particle diameters at 16% accumulation are defined as a volume particle diameter D16v and a number particle diameter D16p, the particle diameters at 50% accumulation are defined as an average particle diameter D50v and an accumulated number average particle diameter D50p, and the particle diameters at 84% accumulation are defined as a volume particle diameter D84v and a number particle diameter D84p.

Then the volume particle size distribution index (GSDv) and the number particle distribution index (GSDp) are calculated as (D84v/D16v)^{1/2} and (D84p/D16p)^{1/2}, respectively, from these values.

The average circularity of the toner particles is preferably 0.94 or more and 1.00 or less and more preferably 0.95 or more and 0.98 or less.

The average circularity of the toner particles is determined from (equivalent circle perimeter)/(perimeter) [(perimeter of a circle having the same projection area as the particle image)/(perimeter of a particle projection image)]. A specific measurement method is as follows.

First, toner particles to be measured are sampled by suction, are allowed to form a flat flow, and are imaged to obtain still images by instantaneous strobe light emission, and these particle images are analyzed by a flow-type particle image analyzer (FPIA-3000 produced by Sysmex Corporation) to determine the average circularity. In determining the average circularity, 3500 particles are sampled.

When the toner contains an external additive, the toner (developer) to be measured is dispersed in surfactant-containing water, and then ultrasonically treated to obtain toner particles from which the external additive have been removed.

### External additive

An example of the external additive is inorganic particles. Examples of the inorganic particles include SiO₂, TiO₂, Al₂O₃, CuO, ZnO, SnO₂, CeO₂, Fe₂O₃, MgO, BaO, CaO, K₂O, Na₂O, ZrO₂, CaO SiO₂, K₂O·(TiO₂)n, Al₂O₃·2SiO₂, CaCO₃, MgCO₃, BaSO₄, and MgSO₄.

The surfaces of the inorganic particles serving as an external additive may be hydrophobized. Hydrophobizing involves, for example, immersing inorganic particles in a hydrophobizing agent. The hydrophobizing agent may be any, and examples thereof include silane coupling agents, silicone oils, titanate coupling agents, and aluminum coupling agents. These agents may be used alone or in combination.

The amount of the hydrophobizing agent relative to 100 parts by mass of the inorganic particles is, for example, usually 1 part by mass or more and 10 parts by mass or less.

Other examples of the external additives include resin particles (resin particles of polystyrene, polymethyl methacrylate (PMMA), melamine resin, etc.), and cleaning activating agents (for example, particles of higher fatty acid metal salts such as zinc stearate and fluorine polymers).

The amount of the external additive relative to the toner particles is preferably 0.01 mass% or more and 5 mass% or less and more preferably 0.01 mass% or more and 2.0 mass% or less.

### Toner production method

Next, a toner production method according to an exemplary embodiment is described.

The toner according to the exemplary embodiment is obtained by externally adding an external additive to the toner particles after production of the toner particles.

The toner particles may be produced by a dry method (for example, a kneading and pulverizing method) or a wet method (for example, an aggregation and coalescence method, a suspension polymerization method, or a dissolution and suspension method). The method for producing the toner particles may be any, and any known method may be employed.

Among these methods, the aggregation and coalescence method may be used to obtain toner particles.

Specifically, for example, the toner particles are produced as follows by the aggregation and coalescence method.

Toner particles are produced through the following steps: a step of preparing a resin particle dispersion in which resin particles that serve as a binder resin are dispersed and a coloring agent particle dispersion in which a coloring agent (specifically, the C.I. Pigment Yellow 101 of this exemplary embodiment) is dispersed (resin particle dispersion preparation step); a step of forming aggregated particles by allowing the resin particles and the coloring agent particles (and other particles if necessary) in a mixed dispersion containing the resin particle dispersion and the coloring agent particle dispersion (or in a dispersion further containing other particle dispersions as necessary) (aggregated particle forming step); and a step of forming toner particles by heating the aggregated particle dispersion in which the aggregated particles are dispersed so as to fuse and coalesce the aggregated particles (fusing and coalescing step).

The respective steps will now be described in detail.

In the description below, a method for obtaining toner particles that contain a releasing agent is described; however, the releasing agent is optional. Naturally, any additives other than the releasing agent may be used.

### Resin particle dispersion preparation step

First, a resin particle dispersion in which resin particles that serve as a binder resin are dispersed is prepared together with, for example, a coloring agent particle dispersion in which coloring agent particles are dispersed, and a releasing agent particle dispersion in which releasing agent particles are dispersed.

Here, the resin particle dispersion is prepared by, for example, dispersing resin particles in a dispersing medium by using a surfactant.

An example of the dispersing medium used in the resin particle dispersion is an aqueous medium.

Examples of the aqueous medium include water such as distilled water and ion exchange water, and alcohols. These may be used alone or in combination.

Examples of the surfactant include anionic surfactants such as sulfate esters, sulfonates, phosphate esters, and soaps; cationic surfactants such as amine salts and quaternary ammonium salts; and nonionic surfactants such as polyethylene glycol, alkyl phenol-ethylene oxide adducts, and polyhydric alcohols. Among these, anionic surfactants and cationic surfactants are particularly preferable. The nonionic surfactants may be used in combination with anionic surfactants or cationic surfactants.

These surfactants may be used alone or in combination.

Examples of the method for dispersing resin particles in a dispersing medium to prepare a resin particle dispersion include typical dispersing methods that use a rotational shear-type homogenizer, or a mill that uses media such as a ball mill, a sand mill, or a dyno mill. Depending on the type of the resin particles, the resin particles may be dispersed in a resin particle dispersion by a phase inversion emulsification method.

The phase inversion emulsification method is a method that involves dissolving a resin to be dispersed in a hydrophobic organic solvent that can dissolve the resin, adding a base to the organic continuous phase (O phase) to neutralize, and then adding an aqueous medium (W phase) to the resulting mixture to perform W/O-to-O/W phase conversion of the resin and to form discontinuous phases so as to disperse particles of the resin in the aqueous medium.

The average particle size of the resin particles to be dispersed in the resin particle dispersion is preferably 0.01 µm or more and 1 µm or less, more preferably 0.08 µm or more and 0.8 µm or less, and yet more preferably 0.1 µm or more and 0.6 µm or less.

The average particle size of the resin particles is determined by using a particle size distribution obtained by measurement with a laser diffraction particle size distribution meter (for example, LA-700 produced by Horiba Ltd.), drawing a cumulative distribution with respect to volume from the small-diameter-side relative to the divided particle size ranges (channels), and assuming the particle diameter at 50% accumulation relative to all particles as the average particle size D50v. Note that the average particle size of other particles in other dispersions is also measured in the same manner.

The amount of the resin particles contained in the resin particle dispersion is, for example, preferably 5 mass% or more and 50 mass% or less and more preferably 10 mass% or more and 40 mass% or less.

The coloring agent particle dispersion and the releasing agent particle dispersion are also prepared in the same manner as the resin particle dispersion. That is, the average particle size of the particles, the dispersing medium, the dispersing method, and the amount of the particles contained described for the resin particle dispersion also apply to the coloring agent particles dispersed in the coloring agent particle dispersion and the releasing agent particles dispersed in the releasing agent particle dispersion.

### Aggregated particle forming step

Next, the resin particle dispersion, the coloring agent particle dispersion, and the releasing agent particle dispersion are mixed.

In the mixed dispersion, the resin particles, the coloring agent particles, and the releasing agent particles are caused to undergo hetero-aggregation to form aggregated particles that have a size close to the target size of the toner particles and contain the resin particles, the coloring agent particles, and the releasing agent particles.

Specifically, for example, an aggregating agent is added to the mixed dispersion, the pH of the mixed dispersion is adjusted to acidic (for example, a pH of 2 or more and 5 or less), a dispersion stabilizer is added as necessary, and the resulting mixture is heated to a temperature near the glass transition temperature of the resin particles (specifically, for example, to a temperature 30°C to 10 ° C lower than the glass transition temperature of the resin particles) so as to aggregate the particle dispersed in the mixed dispersion and thereby form aggregated particles.

In the aggregated particle forming step, for example, the aggregating agent may be added to the mixed dispersion while stirring with a rotary shear homogenizer at room temperature (for example, 25 °C), the pH of the mixed dispersion may be adjusted to acidic (for example, a pH of 2 or more and 5 or less), a dispersion stabilizer may be added as necessary, and then the aforementioned heating may be conducted.

Examples of the aggregating agent include surfactants that have a polarity opposite to the surfactant used as the dispersing agent added to the mixed dispersion, inorganic metal salts, and divalent or higher valent metal complexes. In particular, when a metal complex is used as the aggregating agent, the amount of the surfactant used is decreased, and the charge properties are improved.

An additive that forms a complex or a similar bond with the metal ions in the aggregating agent may be used as necessary. This additive may be a chelating agent.

Examples of the inorganic metal salt include metal salts such as calcium chloride, calcium nitrate, barium chloride, magnesium chloride, zinc chloride, aluminum chloride, and aluminum sulfate, and inorganic metal salt polymers such as polyaluminum chloride, polyaluminum hydroxide, and calcium polysulfide.

A water-soluble chelating agent may be used as the chelating agent. Examples of the chelating agent include oxycarboxylic acids such as tartaric acid, citric acid, and gluconic acid, iminodiacetic acid (IDA), nitrilotriacetic acid (NTA), and ethylenediaminetetraacetic acid (EDTA).

The amount of the chelating agent relative to 100 parts by mass of the resin particles is preferably 0.01 parts by mass or more and 5.0 parts by mass or less and more preferably 0.1 parts by mass or more and 3.0 parts by mass or less.

### Fusing and coalescing step

Next, the aggregated particle dispersion in which the aggregated particles are dispersed is heated to, for example, a temperature higher than the glass transition temperature of the resin particles (for example, a temperature 10 to 30°C higher than the glass transition temperature of the resin particles or higher) to fuse and coalesce the aggregated particles and to thereby form toner particles.

The toner particles are obtained through the above-described steps.

Alternatively, the toner particles may be produced by performing, after the aggregated particle dispersion in which the aggregated particles are dispersed is obtained, a step of forming second aggregated particles by mixing the aggregated particle dispersion with a resin particle dispersion in which the resin particles are dispersed, and then aggregating the particles so that the resin particles attach to the surfaces of the aggregated particles, and a step of forming core-shell structure toner particles by heating the second aggregated particle dispersion in which the second aggregated particles are dispersed so as to fuse and coalesce the second aggregated particles.

After completion of the fusing and coalescing step, the toner particles formed in the solution are subjected to a known washing step, a known solid-liquid separation step, and a known drying step to obtain dry toner particles.

The washing step may involve thorough substitution washing with ion exchange water from the viewpoint of chargeability. The solid-liquid separation step is not particularly limited and may involve suction filtration, pressure filtration, or the like, from the viewpoint of productivity. The drying step is also not particularly limited and may involve freeze-drying, air stream drying, flow-drying, vibrational flow drying, or the like, from the viewpoint of productivity.

The toner of the exemplary embodiment is produced by mixing the obtained dry toner particles with an external additive and mixing the resulting mixture. Mixing may be performed by using, for example, a V blender, a Henschel mixer, a Loedige mixer, or the like. If necessary, coarse particles may be removed by using a vibrating sifter, an air sifter, or the like.

### Electrostatic charge image developer

The electrostatic charge image developer of the exemplary embodiment contains at least the toner of the exemplary embodiment.

The electrostatic charge image developer of the exemplary embodiment may be a one-component developer that contains only the toner of the exemplary embodiment or a two-component developer containing the toner and a carrier.

The carrier may be any and may be a known carrier, for example. Examples of the carrier include a coated carrier obtained by covering a surface of a core formed of a magnetic powder with a coating resin; a magnetic powder-dispersed carrier in which a magnetic powder is dispersed and blended in a matrix resin; and a resin-impregnated carrier in which a porous magnetic powder is impregnated with a resin.

The magnetic powder-dispersed carrier and the resin-impregnated carrier may each be constituted by a core formed of a constituent particle of the carrier, and a coating resin covering the core.

Examples of the magnetic powder include magnetic metals such as iron, nickel, and cobalt, and magnetic oxides such as ferrite and magnetite.

Examples of the coating resin and the matrix resin include polyethylene, polypropylene, polystyrene, polyvinyl acetate, polyvinyl alcohol, polyvinyl butyral, polyvinyl chloride, polyvinyl ether, polyvinyl ketone, a vinyl chloride-vinyl acetate copolymer, a styrene-acrylate copolymer, an organosiloxane bond-containing straight silicone resin and modified products thereof, a fluororesin, polyester, polycarbonate, phenolic resin, and epoxy resin.

The coating resin and the matrix resin may each contain other additives such as conductive particles.

Examples of the conductive particles include particles of metals such as gold, silver, and copper, and particles of carbon black, titanium oxide, zinc oxide, tin oxide, barium sulfate, aluminum borate, and potassium titanate.

Here, an example of the method for coating the surface of the core with a resin include a method that involves coating the surface of the core with a coating layer-forming solution prepared by dissolving a coating resin and, if needed, various additives in an appropriate solvent. The solvent is not particularly limited, and may be selected in view of the type of the coating resin used, application suitability, etc.

Specific examples of the resin coating method include a dipping method that involves dipping a core in a coating layer-forming solution, a spraying method that involves spraying a coating layer-forming solution onto the surface of the core, a flow bed method that involves spraying a coating layer-forming solution while the core floats on flowing air, and a kneader coater method that involves mixing the core for the carrier and a coating layer-forming solution in a kneader coater and removing the solvent.

The toner-to-carrier mixing ratio (mass ratio) in the two-component developer is preferably 1: 100 to 30:100, and more preferably 3: 100 to 20:100.

### EXAMPLES

The exemplary embodiments of the present disclosure will now be described in detail through non-limiting examples.

### EXAMPLE 1

A C.I. Pigment Yellow 101 (produced by BASF, average particle size: 3 µm) is subjected to particle size reduction as follows.

In a preliminary step, the C.I. Pigment Yellow 101 is wetted with water containing 5 mass% of a surfactant (TAYCAPOWER BN2060 produced by Tayca Corporation) relative to the C.I. Pigment Yellow 101 to prepare a slurry having a solid concentration of 20%.

In the particle size reduction step, a continuous-type key mill (KMC-3 produced by INOUE MFG., INC.) is used. The conditions are as follows: high-purity alumina beads (TB-01 produced by TAIMEI CHEMICALS Co., Ltd.) having a bead specific weight of 3.9 and a bead diameter of 0.10 mm are used, and particle size reduction is performed by charging the beads to 80% of the volume of the bead mill container and setting the peripheral speed of the stirring mechanism to 9.3 m/s until the average particle size reaches 700 nm. After completion of the particle size reduction, the slurry is dried at a reduced pressure to obtain a powdery C.I. Pigment Yellow 101, followed by measurement and evaluation.

### EXAMPLE 2

Particle size reduction is performed as in Example 1 except that the average particle size after the particle size reduction is set to 500 nm.

### EXAMPLE 3

Particle size reduction is performed as in Example 1 except that the average particle size after the particle size reduction is set to 250 nm.

### EXAMPLE 4

Particle size reduction is performed as in Example 1 except that the average particle size after the particle size reduction is set to 150 nm.

### EXAMPLE 5

Particle size reduction is performed as in Example 1 except that the average particle size after the particle size reduction is set to 100 nm.

### EXAMPLE 6

Particle size reduction is performed as in Example 1 except that the beads used are glass beads (BZ-01 produced by AS ONE CORPORATION) having a bead specific weight of 2.5 and a bead diameter of 0.10 mm.

### EXAMPLE 7

Particle size reduction is performed as in Example 1 except that the beads used are zirconia beads (YTZ-0.1 produced by Nikkato Corporation) having a bead specific weight of 6.0 and a bead diameter of 0.10 mm.

### EXAMPLE 8

Particle size reduction is performed as in Example 1 except that the beads used are stainless steel beads having a bead specific weight of 7.6 and a bead diameter of 0.11 mm. The stainless steel beads having an average bead diameter of 0.11 mm used herein are obtained by removing beads 90 µm or smaller in size from SUS 304-150 having a bead diameter of 125 to 45 µm produced by Fuji Manufacturing Co., Ltd., through a 90 µm screen.

### EXAMPLE 9

Particle size reduction is performed as in Example 1 except that the beads used are zirconia beads (YTZ-0.03 produced by Nikkato Corporation) having a bead specific weight of 6.0 and a bead diameter of 0.03 mm and that the bead mill apparatus is Easy nano RMB type (produced by AIMEX CO., Ltd.).

### EXAMPLE 10

Particle size reduction is performed as in Example 1 except that the beads used are high-purity alumina beads (TB-03 produced by TAIMEI CHEMICALS Co., Ltd.) having a bead specific weight of 3.9 and a bead diameter of 0.30 mm.

### EXAMPLE 11

Particle size reduction is performed as in Example 1 except that the beads used are high-purity alumina beads (TB-04 produced by TAIMEI CHEMICALS Co., Ltd.) having a bead specific weight of 3.9 and a bead diameter of 0.40 mm.

### EXAMPLE 12

Particle size reduction is performed as in Example 1 except that the peripheral speed of the stirring mechanism is 4.8 m/s.

### EXAMPLE 13

Particle size reduction is performed as in Example 1 except that the peripheral speed of the stirring mechanism is 14.4 m/s.

### EXAMPLE 14

Particle size reduction is performed as in Example 1 except that the bead mill apparatus is Easy nano RMB type (produced by AIMEX CO., Ltd.) and that the peripheral speed of the stirring mechanism is 15.0 m/s.

### EXAMPLE 15

Particle size reduction is performed as in Example 1 except that the beads used are zirconia beads (YTZ-0.3 produced by Nikkato Corporation) having a bead specific weight of 6.0 and a bead diameter of 0.30 mm and that the peripheral speed of the stirring mechanism is 14.4 m/s.

### EXAMPLE 16

Particle size reduction is performed as in Example 1 except that the average particle size after the particle size reduction is set to 250 nm and that the beads used are glass beads (BZ-01 produced by AS ONE CORPORATION) having a bead specific weight of 2.5 and a bead diameter of 0.10 mm.

### EXAMPLE 17

Particle size reduction is performed as in Example 1 except that the average particle size after the particle size reduction is set to 250 nm and that the beads used are zirconia beads (YTZ-0.1 produced by Nikkato Corporation) having a bead specific weight of 6.0 and a bead diameter of 0.10 mm.

### EXAMPLE 18

Particle size reduction is performed as in Example 1 except that the average particle size after the particle size reduction is set to 250 nm, that the beads used are zirconia beads (YTZ-0.03 produced by Nikkato Corporation) having a bead specific weight of 6.0 and a bead diameter of 0.03 mm, and that the bead mill apparatus is Easy nano RMB type (produced by AIMEX CO., Ltd.).

### EXAMPLE 19

Particle size reduction is performed as in Example 1 except that the average particle size after the particle size reduction is set to 250 nm and that the beads used are high-purity alumina beads (TB-03 produced by TAIMEI CHEMICALS Co., Ltd.) having a bead specific weight of 3.9 and a bead diameter of 0.30 mm.

### EXAMPLE 20

Particle size reduction is performed as in Example 1 except that the average particle size after the particle size reduction is set to 250 nm and that the peripheral speed of the stirring mechanism is 4.8 m/s.

### EXAMPLE 21

Particle size reduction is performed as in Example 1 except that the average particle size after the particle size reduction is set to 250 nm and that the peripheral speed of the stirring mechanism is 14.4 m/s.

### EXAMPLE 22

Particle size reduction is performed as in Example 1 except that the average particle size after the particle size reduction is set to 250 nm, that the beads used are zirconia beads (YTZ-0.3 produced by Nikkato Corporation) having a bead specific weight of 6.0 and a bead diameter of 0.30 mm, and the peripheral speed of the stirring mechanism is 14.4 m/s.

### EXAMPLE 23

Particle size reduction is performed as in Example 1 except that the average particle size after the particle size reduction is set to 250 nm and that the bead charge rate is 70%.

### EXAMPLE 24

Particle size reduction is performed as in Example 1 except that the average particle size after the particle size reduction is set to 250 nm and that the bead charge rate is 90%.

### EXAMPLE 25

Particle size reduction is performed as in Example 1 except that the C.I. Pigment Yellow 101 used is the one from a separate production lot available from BASF (average particle size: 5 µm) and that the average particle size after the particle size reduction is set to 250 nm.

### EXAMPLE 26

Particle size reduction is performed as in Example 1 except that the C.I. Pigment Yellow 101 used is the one available from Neelikon Food Dyes And Chemicals Ltd., (average particle size: 1 µm) and that the average particle size after the particle size reduction is set to 250 nm.

### COMPARATIVE EXAMPLE 1

Particle size reduction is performed by a high-pressure dispersing method as the particle size reduction system by using an impact-type disperser Ultimaizer (produced by SUGINO MACHINE LIMITED). The slurry is prepared as in Example 1, and particle size reduction is performed under a 240 MPa condition until the average particle size is 700 nm.

### COMPARATIVE EXAMPLE 2

Particle size reduction is performed as in Example 1 except that the beads used are zirconia beads (YTZ-0.4 produced by Nikkato Corporation) having a bead specific weight of 6.0 and a bead diameter of 0.40 mm, that the bead mill apparatus is Easy nano RMB type (produced by AIMEX CO., Ltd.), and that the peripheral speed of the stirring mechanism is 15.0 m/s.

### COMPARATIVE EXAMPLE 3

Particle size reduction is performed as in Example 1 except that the average particle size after the particle size reduction is set to 250 nm and that the beads used are stainless steel beads having a bead specific weight of 7.6 and a bead diameter of 0.11 mm. The stainless steel beads having an average bead diameter of 0.11 mm used herein are obtained by removing beads 90 µm or smaller in size from SUS 304-150 having a bead diameter of 125 to 45 µm produced by Fuji Manufacturing Co., Ltd., through a 90 µm screen.

### COMPARATIVE EXAMPLE 4

Particle size reduction is performed as in Example 1 except that the average particle size after the particle size reduction is set to 250 nm and that the beads used are high-purity alumina beads (TB-04 produced by TAIMEI CHEMICALS Co., Ltd.) having a bead specific weight of 3.9 and a bead diameter of 0.40 mm.

### COMPARATIVE EXAMPLE 5

Particle size reduction is performed as in Example 1 except that the average particle size after the particle size reduction is set to 250 nm, that the bead mill apparatus is Easy nano RMB type (produced by AIMEX CO., Ltd.), and that the peripheral speed of the stirring mechanism is 15.0 m/s.

### Measurement

The following physical properties of C.I. Pigment Yellow 101 (dried) after the particle size reduction obtained in Examples and Comparative Examples are measured by the aforementioned methods.

### Average particle size

### Diffraction angles 2θ of peaks in X-ray diffraction pattern

### Evaluation

Spectral reflection factors of C.I. Pigment Yellow 101 (dried) after the particle size reduction are measured by using a spectral reflectometer eXact (registered trademark) (produced by X-rite, Incorporated) at 520 nm. Next, the fluorescent color of the C.I. Pigment Yellow 101 after the particle size reduction is evaluated through the spectral reflection factors. Evaluation is conducted according to the following standard.
A: 110 or higher.
B: 90 or higher.
C: Less than 90.

The results are indicated in Tables 1-1 and 1-2.

**Table 1-1**

| | Average particle size before particle size reduction (µm) | Average particle size after particle size reduction (nm) | Diffraction angle 2θ of second peak from low angle side (°) | Diffraction angle 2θ of third peak from low angle side (°) |
|---|---|---|---|---|
| Example 1 | 3 | 700 | 11.67 | 17.87 |
| Example 2 | 3 | 500 | 11.69 | 17.88 |
| Example 3 | 3 | 250 | 11.74 | 17.95 |
| Example 4 | 3 | 150 | 11.76 | 17.96 |
| Example 5 | 3 | 100 | 11.82 | 18.03 |
| Example 6 | 3 | 700 | 11.67 | 17.87 |
| Example 7 | 3 | 700 | 11.70 | 17.90 |
| Example 8 | 3 | 700 | 11.77 | 17.98 |
| Example 9 | 3 | 700 | 11.67 | 17.87 |
| Example 10 | 3 | 700 | 11.73 | 17.94 |
| Example 11 | 3 | 700 | 11.81 | 18.03 |
| Example 12 | 3 | 700 | 11.67 | 17.87 |
| Example 13 | 3 | 700 | 11.72 | 17.93 |
| Example 14 | 3 | 700 | 11.79 | 18.00 |
| Example 15 | 3 | 700 | 11.76 | 17.96 |
| Example 16 | 3 | 250 | 11.74 | 17.93 |
| Example 17 | 3 | 250 | 11.78 | 17.99 |
| Example 18 | 3 | 250 | 11.73 | 17.93 |
| Example 19 | 3 | 250 | 11.83 | 18.05 |
| Example 20 | 3 | 250 | 11.74 | 17.94 |
| Example 21 | 3 | 250 | 11.82 | 18.03 |
| Example 22 | 3 | 250 | 11.85 | 18.07 |
| Example 23 | 3 | 250 | 11.74 | 17.94 |
| Example 24 | 3 | 250 | 11.74 | 17.95 |
| Example 25 | 5 | 250 | 11.74 | 17.95 |
| Example 26 | 1 | 250 | 11.73 | 17.95 |
| Comparative Example 1 | 3 | 700 | 11.88 | 18.11 |
| Comparative Example 2 | 3 | 700 | 11.88 | 18.09 |
| Comparative Example 3 | 3 | 250 | 11.87 | 18.08 |
| Comparative Example 4 | 3 | 250 | 11.92 | 18.14 |
| Comparative Example 5 | 3 | 250 | 11.89 | 18.11 |

**Table 1-2**

| | Particle size reduction system | Bead specific weight | Bead diameter (mm) | Peripheral speed of stirring mechanism (m/s) | Bead charge rate (%) | Evaluation (fluorescent color) |
|---|---|---|---|---|---|---|
| Example 1 | Bead mill | 3.9 | 0.10 | 9.3 | 80 | A |
| Example 2 | Bead mill | 3.9 | 0.10 | 9.3 | 80 | A |
| Example 3 | Bead mill | 3.9 | 0.10 | 9.3 | 80 | A |
| Example 4 | Bead mill | 3.9 | 0.10 | 9.3 | 80 | A |
| Example 5 | Bead mill | 3.9 | 0.10 | 9.3 | 80 | B |
| Example 6 | Bead mill | 2.5 | 0.10 | 9.3 | 80 | A |
| Example 7 | Bead mill | 6.0 | 0.10 | 9.3 | 80 | A |
| Example 8 | Bead mill | 7.6 | 0.11 | 9.3 | 80 | B |
| Example 9 | Bead mill | 6.0 | 0.03 | 9.3 | 80 | A |
| Example 10 | Bead mill | 3.9 | 0.30 | 9.3 | 80 | A |
| Example 11 | Bead mill | 3.9 | 0.40 | 9.3 | 80 | B |
| Example 12 | Bead mill | 3.9 | 0.10 | 4.8 | 80 | A |
| Example 13 | Bead mill | 3.9 | 0.10 | 14.4 | 80 | A |
| Example 14 | Bead mill | 3.9 | 0.10 | 15.0 | 80 | B |
| Example 15 | Bead mill | 6.0 | 0.30 | 14.4 | 80 | A |
| Example 16 | Bead mill | 2.5 | 0.10 | 9.3 | 80 | A |
| Example 17 | Bead mill | 6.0 | 0.10 | 9.3 | 80 | B |
| Example 18 | Bead mill | 6.0 | 0.03 | 9.3 | 80 | A |
| Example 19 | Bead mill | 3.9 | 0.30 | 9.3 | 80 | B |
| Example 20 | Bead mill | 3.9 | 0.10 | 4.8 | 80 | A |
| Example 21 | Bead mill | 3.9 | 0.10 | 14.4 | 80 | B |
| Example 22 | Bead mill | 6.0 | 0.30 | 14.4 | 80 | B |
| Example 23 | Bead mill | 3.9 | 0.10 | 9.3 | 70 | A |
| Example 24 | Bead mill | 3.9 | 0.10 | 9.3 | 90 | A |
| Example 25 | Bead mill | 3.9 | 0.10 | 9.3 | 80 | A |
| Example 26 | Bead mill | 3.9 | 0.10 | 9.3 | 80 | A |
| Comparative Example 1 | High-pressure dispersing | - | - | - | - | C |
| Comparative Example 2 | Bead mill | 6.0 | 0.40 | 15.0 | 80 | C |
| Comparative Example 3 | Bead mill | 7.6 | 0.11 | 9.3 | 80 | C |
| Comparative Example 4 | Bead mill | 3.9 | 0.40 | 9.3 | 80 | C |
| Comparative Example 5 | Bead mill | 3.9 | 0.10 | 15.0 | 80 | C |

The results in Tables 1-1 and 1-2 find that C.I. Pigment Yellow 101 exhibiting a high fluorescent color despite the small particle size can be obtained in Examples compared to Comparative Examples.

Here, as one example, the X-ray diffraction patterns obtained by powder X-ray diffractometry from the C.I. Pigment Yellow 101 before the particle size reduction (Fig. 1A), the C.I. Pigment Yellow 101 after the particle size reduction in Examples (Fig. 1B), and the C.I. Pigment Yellow 101 after the particle size reduction in Comparative Examples (Fig. 1C) are presented.

As illustrated in Figs. 1A to 1C, the individual peaks in the X-ray diffraction pattern of the C.I. Pigment Yellow 101 after the particle size reduction in Examples (see Fig. 1B) do not shift excessively from those before the particle size reduction (see Fig. 1A) unlike the C.I. Pigment Yellow 101 after the particle size reduction in Comparative Examples (Fig. 1C).

Thus, the C.I. Pigment Yellow 101 exhibiting a high fluorescent color despite the small particle size can be obtained in Examples compared to Comparative Examples.

### EXAMPLES 101 to 126

Toners and developers that use the C.I. Pigment Yellow 101 of Examples 1 to 26 are prepared by the following procedures.

### Preparation of C.I. Pigment Yellow 101 dispersion

In the particle size reduction steps in Examples 1 to 26, C.I. Pigment Yellow 101 dispersions having a solid content of 20 mass% are obtained from the C.I. Pigment Yellow 101 dispersions after the particle size reduction and before drying.

### Preparation of resin particle dispersion

· terephthalic acid: 30 parts by mol
· fumaric acid: 70 parts by mol
· bisphenol A ethylene oxide adduct: 5 parts by mol
· bisphenol A propylene oxide adduct: 95 parts by mol

The aforementioned materials are placed in a flask equipped with a stirrer, a nitrogen inlet tube, a temperature sensor, and a distillation column, the temperature is elevated to 220 °C over a period of 1 hour, and 1 part of titanium tetraethoxide is added to 100 parts of the aforementioned materials. The temperature is elevated to 230°C over a period of 30 minutes while distilling away the generated water, the dehydration and condensation reaction is continued for 1 hour at this temperature, and then the reaction product is cooled. As a result, a polyester resin having a weight-average average molecular weight of 18,000 and a glass transition temperature of 60°C is obtained.

Into a container equipped with a temperature control unit and a nitrogen purging unit, 40 parts of ethyl acetate and 25 parts of 2-butanol are charged to form a mixed solvent, 100 parts of a polyester resin is gradually added thereto and dissolved, and a 10 mass% aqueous ammonia solution (in an amount corresponding to triple the molar ratio with respect to the acid value of the resin) is added thereto, followed by stirring for 30 minutes. Next, the container is purged with dry nitrogen, the temperature is held at 40°C, and 400 parts of ion exchange water is added dropwise thereto at a rate of 2 parts/min while stirring the mixed solution. After the dropwise addition, the temperature is returned to room temperature (20°C to 25 ° C), and the resulting product is bubbled for 48 hours with dry nitrogen under stirring to obtain a resin particle dispersion in which ethyl acetate and 2-butanol are reduced to 1,000 ppm or less. To the resulting resin particle dispersion, ion exchange water is added to adjust the solid content to 20 mass% to obtain a resin particle dispersion.

### Preparation of releasing agent particle dispersion

· paraffin wax (HNP-9 produced by Nippon Seiro Co., Ltd.): 100 parts
· anionic surfactant (NEOGEN RK produced by DKS Co. Ltd.): 1 part
· ion exchange water: 350 parts

The aforementioned materials are mixed, heated to 100°C, and dispersed by using a homogenizer (ULTRA-TURRAX T50 produced by IKA Japan), and then the dispersed mixture is dispersed by using a Manton-Gaulin pressure homogenizer (produced by Gaulin Company) to obtain a releasing agent particle dispersion (solid content: 20 mass%) in which the releasing agent particles having a volume-average particle size of 200 nm are dispersed.

### Preparation of toner particles

· resin particle dispersion: 400 parts
· C.I. Pigment Yellow 101 dispersion: 50 parts
· releasing agent particle dispersion: 25 parts
· anionic surfactant (NEOGEN RK produced by DKS Co. Ltd., 20%): 10 parts

The aforementioned materials are placed in a round stainless steel flask, 0.1 N (= mol/L) nitric acid is added thereto to adjust the pH to 3.5, and then 30 parts of a nitric acid aqueous solution having a polyaluminum chloride concentration of 10 mass% is added thereto. The resulting mixture is dispersed in a homogenizer (ULTRA-TURRAX T50 produced by IKA Japan) at a liquid temperature of 30°C, and heated to 45 ° C over a heating oil bath, and held thereat for 30 minutes. Then 50 parts of the resin particle dispersion is added, the resulting mixture is held for 1 hour, a 0.1 N aqueous sodium hydroxide solution is added thereto to adjust the pH to 8.5, and then the resulting mixture is heated to 84 ° C and held thereat for 2.5 hours. Next, the mixture is cooled at a rate of 20°C/ min to 20°C, and the solid matter is filtered out, thoroughly washed with ion exchange water, and dried to obtain toner particles. The volume-average particle size of the toner particles is 5.8 µm.

### Preparation of carrier

· ferrite particles (average particle diameter: 35 µm): 100 parts
· toluene: 14 parts
· polymethyl methacrylate (PMMA, weight-average average molecular weight: 75,000): 5 parts
· carbon black (VXC-72 produced by Cabot Corporation, volume resistivity: 100 Ω·cm or less): 0.2 parts

The aforementioned materials other than the ferrite particles are dispersed using a sand mill to prepare a dispersion, and the dispersion and the ferrite particles are placed in a vacuum deaeration kneader and dried under stirring at a reduced pressure to obtain a carrier.

### Preparation of toner

To 100 parts of the obtained toner particles, 1.5 parts of hydrophobic silica (RY50 produced by NIPPON AEROSIL CO., LTD.) and 1.0 part of hydrophobic titanium oxide (T805 produced by NIPPON AEROSIL CO., LTD.) are added, and the resulting mixture is blended for 30 seconds by using a sample mill at 10,000 rpm (revolutions per minute). Then the resulting mixture is sifted through a vibrating screen having 45 µm openings to prepare a toner. The volume-average particle size of the toner obtained is 5.8 µm.

### Preparation of electrostatic charge image developer

By using a V blender, 8 parts of the toner and 92 parts of the carrier are mixed to prepare an electrostatic charge image developer.

### Evaluation (color forming property)

All of the developers of the examples obtained are evaluated to have excellent color forming properties.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A C.I. Pigment Yellow 101 having an average particle size of 100 nm or more and 700 nm or less,
   wherein, in an X-ray diffraction pattern obtained by powder X-ray diffractometry, a second peak from a low angle side is present at a diffraction angle 2θ in the range of 11.66° or more and 11.86° or less.
(((2))) The C.I. Pigment Yellow 101 described in (((1))), wherein the average particle size is 150 nm or more and 500 nm or less.
(((3))) The C.I. Pigment Yellow 101 described in (((1))) or (((2))), wherein, in the X-ray diffraction pattern obtained by powder X-ray diffractometry, a third peak from the low angle side is present at a diffraction angle 2θ in a range of 17.86° or more and 18.06° or less.
(((4))) A method for producing the C.I. Pigment Yellow 101 described in any one of (((1))) to (((3))), the method comprising:
   subjecting a C.I. Pigment Yellow 101 having an average particle size of 1 µm or more and 5 µm or less to particle size reduction by using beads having a specific weight of 2.5 or more and 6.0 or less and a bead diameter of 0.03 mm or more and 0.3 mm or less and a stirring mechanism at a peripheral speed of 4.8 m/s or more and 14.4 m/s or less.
(((5))) (((1))) A coloring composition comprising the C.I. Pigment Yellow 101 described in any one of
(((6))) The coloring composition described in (((5))), wherein the coloring composition is a toner for developing electrostatic charge images.

The aspects described above have the following effects.

According to (((1))), there is provided a C.I. Pigment Yellow 101 that exhibits a high fluorescent color despite the small particle size compared to a C.I. Pigment Yellow 101 having an average particle size of 100 nm or more and 700 nm or less, in which, in an X-ray diffraction pattern obtained by powder X-ray diffractometry, the second peak from the low angle side is present at a diffraction angle 2θ of less than 11.66° or more than 11.86°.

According to (((2))), there is provided a C.I. Pigment Yellow 101 that exhibits a high fluorescent color despite the small particle size compared to a C.I. Pigment Yellow 101 that has an average particle size of 100 nm or more and less than 150 nm, or more than 500 nm and 700 nm or less.

According to (((3))), there is provided a C.I. Pigment Yellow 101 that exhibits a high fluorescent color despite the small particle size compared to a C.I. Pigment Yellow 101 in which, in an X-ray diffraction pattern obtained by powder X-ray diffractometry, the second peak from the low angle side is present at a diffraction angle 2θ of 11.66° or more and 11.86° or less and the third peak from the low angle side is present at a diffraction angle 2θ of less than 17.86° or more than 18.06°.

According to (((4))), there is provided a method for producing a C.I. Pigment Yellow 101 that exhibits a high fluorescent color despite the small particle size compared to a method for producing a C.I. Pigment Yellow 101, the method involving subjecting a C.I. Pigment Yellow 101 having an average particle size of 1 µm or more and 5 µm or less to particle size reduction by using beads having a specific weight of less than 2.5 or more than 6.0 and a bead diameter of less than 0.03 mm or more than 0.3 mm and a stirring mechanism at a peripheral speed of less than 4.8 m/s or more than 14.4 m/s.

According to (((5))), there is provided a coloring composition that contains a C.I. Pigment Yellow 101 that exhibits a high fluorescent color despite the small particle size compared to when a C.I. Pigment Yellow 101 having an average particle size of 100 nm or more and 700 nm or less, in which, in the X-ray diffraction pattern obtained by powder X-ray diffractometry, the second peak from the low angle side is present at a diffraction angle 2θ of less than 11.66° or more than 11.86° is applied.

According to (((6))), there is provided a coloring composition that serves as a toner for developing electrostatic charge images and that contains a C.I. Pigment Yellow 101 that exhibits a high fluorescent color despite the small particle size compared to when a C.I. Pigment Yellow 101 having an average particle size of 100 nm or more and 700 nm or less, in which, in the X-ray diffraction pattern obtained by powder X-ray diffractometry, the second peak from the low angle side is present at a diffraction angle 2θ of less than 11.66° or more than 11.86° is applied.

## Claims

1. A C.I. Pigment Yellow 101 having an average particle size of 100 nm or more and 700 nm or less,
wherein, in an X-ray diffraction pattern obtained by powder X-ray diffractometry, a second peak from a low angle side is present at a diffraction angle 2θ in a range of 11.66° or more and 11.86° or less.

2. The C.I. Pigment Yellow 101 according to claim 1, wherein the average particle size is 150 nm or more and 500 nm or less.

3. The C.I. Pigment Yellow 101 according to claim 1 or 2, wherein, in the X-ray diffraction pattern obtained by powder X-ray diffractometry, a third peak from the low angle side is present at a diffraction angle 2θ in a range of 17.86° or more and 18.06° or less.

4. A method for producing the C.I. Pigment Yellow 101 according to any one of claims 1 to 3, the method comprising:
subjecting a C.I. Pigment Yellow 101 having an average particle size of 1 µm or more and 5 µm or less to particle size reduction by using beads having a specific weight of 2.5 or more and 6.0 or less and a bead diameter of 0.03 mm or more and 0.3 mm or less and a stirring mechanism at a peripheral speed of 4.8 m/s or more and 14.4 m/s or less.

5. A coloring composition comprising the C.I. Pigment Yellow 101 according to any one of claims 1 to 3.

6. The coloring composition according to claim 5, wherein the coloring composition is a toner for developing electrostatic charge images.
